# EUROPEAN PATENT SPECIFICATION

(11) **EP 4 282 717 B1**
(45) Date of publication and mention of the grant of the patent: **20.11.2024**
(21) Application number: 23174183.6
(22) Date of filing: 18.05.2023
(51) Int. Cl.: B60S 3/04, B60S 3/00

(54) **VEHICLES WASHING MACHINE WITH ROTATING WASHING FLUID DISPENSING BAR AND OSCILLATING NOZZLES**
FAHRZEUGWASCHMASCHINE MIT ROTIERENDER WASCHWASSERAUSGABESTANGE UND OSZILLIERENDEN DÜSEN
MACHINE À LAVER POUR VÉHICULES AVEC BARRE DE DISTRIBUTION DE LIQUIDE DE LAVAGE ROTATIVE ET BUSES OSCILLANTES

(30) Priority: 24.05.2022 IT 202200010802
(43) Date of publication of application: 29.11.2023
(73) Proprietor: Aquarama S.r.l., 12060 Novello (CN) (IT)
(72) Inventor: ABBÀ, Adriano Mario, 12010 VIGNOLO (CN) (IT); FULCHERI, Bruno, 12060 Bastia Mondovì (CN) (IT)
(74) Representative: Karaghiosoff, Giorgio Alessandro

(56) References cited:
- WO-A1-96/05088
- WO-A2-2009/135095
- US-A1- 2002 162 575

## Description

The present invention relates to a vehicle washing machine, in particular cars or the like, comprising at least one gantry on which a dispensing bar of at least one washing fluid is mounted,
wherein the dispensing bar comprises at least one crossbar supporting at least one nozzle dispensing said washing fluid, and wherein the crossbar is rotatably mounted for a predetermined angular amplitude around an axis coincident with and/or parallel to its longitudinal axis;
at least one motorised rotary drive unit of said crossbar being provided for rotating said crossbar around said longitudinal axis of rotation,
wherein said at least one nozzle is mounted on said crossbar with its central jet propagation axis oriented transversely to the longitudinal extension of said crossbar,
said at least one nozzle is fixed to said crossbar in an oscillating manner around an axis perpendicular to a plane parallel to said crossbar longitudinal axis and/or containing said central axis of fluid propagation dispensed by said at least one nozzle, said at least one nozzle being provided with a gear reducer member for driving said oscillating motion of said nozzle.

Devices of this type are known in the state of the art and have different configurations of the nozzles as well as of their distribution along the support group, i.e. the dispensing bar.

Also the support group can have different configurations which include, for example, a crossbar which is mounted on a vertical support structure in the form of a bridge or tunnel and which can be moved along the sides and/or the front side and/or the rear side of the vehicle and on which at least one nozzle is mounted which can be moved vertically along said vertical structure or on which a plurality of nozzles aligned along the vertical extension of said structure are mounted and which can be activated all together or in the number necessary to cover the full height of the vehicle gauge.

Alternatively or in combination, the support structure of the nozzle(s) consists of a horizontal crossbar which is guided vertically translatable for a predetermined stroke which goes from a position of minimum height from the ground to a position of maximum height and which crossbar is further translatable relative to the vehicle in the direction of the longitudinal axis of the same, or the front-rear axis of the vehicle.

Also in this case, according to an alternative, the crossbar can carry a plurality of nozzles, placed side by side along the longitudinal axis of the same and each of which is intended to treat a predetermined longitudinal band of the vehicle of a plurality of longitudinal bands which cover the whole width of the vehicle or according to a further possible alternative the bar has at least one nozzle which can be moved along it so as to treat the whole width of the vehicle.

In all of the aforementioned embodiments it is also known that the said at least one nozzle or the said plurality of nozzles and/or the said support group can oscillate for at least a certain angle of variation of the direction of the propagation axis of the jet of fluid with respect to the surface of the vehicle, generating an alternative displacement of the point of incidence of the jet on the surface of said vehicle.

The treatment of the entire surface of the vehicle is also determined according to the alternative configurations described above or other configurations, providing for a predetermined opening of the dispensed jet, preferably symmetrically to a central axis of propagation of the jet, here indicated simply as the axis of propagation and which aperture has predetermined dimensions according to two mutually perpendicular axes which subtend a plane perpendicular to said propagation axis.

The movement of the support group and/or of the nozzle(s) relative to the vehicle takes place thanks to sensors for detecting the vehicle gauge relative to the side profile, i.e. the projection of the profile of the vehicle on a vertical plane parallel to the front-rear axis of the vehicle and/or when required also of the shape of the front and/or rear profile of the vehicle, i.e. the projection of the vehicle profile on a vertical plane transverse to the front-rear axis of the vehicle.

The detection of the shape, i.e. of the shape of the vehicle profile, in particular of the lateral one, can take place by means of different types of sensors, such as for example by means of a combination of proximity or optical sensors mounted on the support group(s) or of the nozzle(s), or thanks to elements for scanning the shape of the vehicle consisting of a set of proximity or optical sensors arranged vertically aligned with each other so as to cover a pre-established vertical band which goes from ground level to a pre-established height and thanks to which it is possible to detect the shape of the vehicle by moving said group of sensors along the corresponding side of the vehicle.

Current resolutions are of the order of a few centimeters and are sufficient to detect the presence of protruding parts according to the definition of the present invention as will be detailed hereinafter.

The relative movement between the vehicle and the delivery bar takes place thanks to a control unit of relative movement actuators which move the vehicle and/or preferably the gantry or said bar in the front-rear direction of the vehicle and in the vertical direction, in such a way that the maximum size of the dispensing bar has a non-interfering distance from the vehicle and in any case a predetermined distance of the nozzles from the vehicle so as to optimize the efficiency of the given treatment of the pressurized fluid.

In the state of the art it is known to be able to rotate the delivery bar of the washing fluid around a horizontal axis coinciding with the longitudinal extension of said bar so as to vary the inclination of the propagation axis of the jets generated by the nozzles present on said bar with respect to the horizontal plane upwards and/or downwards.

This inclination is defined during the manufacturing of the system and determines that the axis of the jet has a directional component which is not only vertical or perpendicular to the surface against which it is oriented, but also an antero-posterior direction component of the vehicle.

Furthermore, in some solutions provided in the state of the art it is known to oscillate the delivery jets in the transversal direction of the vehicle, i.e. in the direction of its width.

The oscillatory movements of the nozzles can be performed separately from each other and/or in a synchronized and even contemporary manner, as well as in an alternative manner in which the propagation axes of the jets leaving the nozzles are oscillated for a certain angular amplitude forwards and backwards between two extreme positions, in the longitudinal direction of the vehicle and/or in the vertical direction as well as in the transverse direction of the vehicle generating a forward and rearward and/or up and down and/or side to side sweeping function of the vehicle.

Such movements of the jets to vary the direction of incidence against the surfaces to be treated according to different directions, are important in order to allow to obtain better treatment results in motor vehicles which have complex shapes, with protruding elements which form undercuts, i.e. elements which overlap in part and at a certain vertical distance to other parts of the vehicle. These conditions arise, for example, in the presence of spoilers or when a body is mounted on the roof of the vehicle thanks to support bars which therefore overlaps at least part of the roof and/or also at least part of the front windscreen by a certain vertical distance and /or back.

In many cases, between the lower side of said protruding elements such as spoilers or the like and the part of the vehicle car body and/or the windscreen or rear window band on which said protruding elements overlap, the corner area enclosed by them has an angular amplitude corresponding to an acute angle, while in vehicles, for example, with a so-called truncated tail or with a substantially vertical rear side, said angle is at most of the order of about 90°.

On the other hand, when there is a box mounted on the roof of the vehicle in addition to the corner area present in the parts of the box protruding beyond the front and rear sides of the roof, in the roof area the bottom side of the box is parallel to the roof itself and the distance is a few centimeters or approximately ten centimeters.

In the aforementioned conditions of protruding "roof" parts such as spoilers or the like and/or in the presence of boxes, known systems do not guarantee cleaning of the underside of said protruding part, or of the spoiler and/or box and/or also of the wall strip or rear window or windscreen of the vehicle to which said protruding part overlaps at a certain distance.

While the oscillation of the jets delivered in the longitudinal direction of the vehicle, i.e. forwards and backwards and/or in the vertical direction, i.e. upwards and downwards, can be achieved in a relatively simple, safe and economical way, the oscillation of the jets combined with the previous one and from side to side of the vehicle, i.e. in a direction transversal to the same, involves constructive complications in order to avoid limitations of the angle of rotation or orientation of the dispensing bar.

In particular, wishing to guarantee rotations of the dispensing bar around a longitudinal axis of the same or to an axis parallel to this longitudinal axis, which rotations can have angular amplitudes even greater than 360°, currently a solution can provide that each nozzle is mounted oscillating in the transverse direction of the vehicle, i.e. the width of the vehicle and which is controlled by at least one gear reducer also mounted on the rotating part of the dispensing bar. This involves using slip rings or very long loops of wire to form enough richness to cover the desired angular displacements.

It therefore appears evident that the more direct solution involves higher costs and greater constructional complexity. In particular, mounting the oscillation gear reducer of the nozzle or nozzles present on a dispensing bar, on the mobile part of this bar involves an increase in the inertial mass of the bar and therefore a greater torque required of the mechanisms which control and implement the rotation of the bar around to its longitudinal axis. WO-A-96/05088 shows the preamble of claim .

The invention therefore has the purpose of perfecting a vehicles washing machine ensuring that, thanks to relatively simple and easily feasible expedients, the possibility of greater degrees of freedom in the orientation of the washing fluid delivery jets, in particular as regards the oscillation of the delivery nozzles in order to generate brushing effects in the direction of the vehicle width.

The invention solves the problem posed thanks to a machine for washing vehicles, in particular cars or the like, comprising at least one gantry on which a dispensing bar of at least one washing fluid is mounted,
wherein the dispensing bar comprises at least one crossbar supporting at least one nozzle dispensing said washing fluid, and wherein the crossbar is rotatably mounted for a predetermined angular amplitude around an axis coincident with and/or parallel to its longitudinal axis;
at least one motorised rotary drive unit of said crossbar being provided for rotating said crossbar around said longitudinal axis of rotation,
wherein said at least one nozzle is mounted on said crossbar with its central jet propagation of axis oriented transversely to the longitudinal extension of said crossbar,
said at least one nozzle is fixed to said crossbar in an oscillating manner around an axis perpendicular to a plane parallel to said crossbar longitudinal axis and/or containing said central axis of fluid propagation dispensed by said at least one nozzle, said at least one nozzle being provided with a gear reducer member for driving said oscillatory motion of said nozzle,
and wherein further
said gear reducer member for driving said oscillatory motion of said at least one nozzle being assembled on a support terminal of said crossbar which is stationary, i.e. non rotating and is provided at least one end of said crossbar and to which said crossbar is connected so as to rotate around said axis of rotation,
said gear reducer member being dynamically connected to a slider-crank transmission mechanism, the crank in turn controlling a mechanism comprising at least one oscillating plate supporting at least one nozzle, said connecting rod being provided with its longitudinal axis coinciding with the axis of rotation of said crossbar and being connected to at least one control arm of said at least one oscillating plate by means of a ball joint.

Various embodiments are possible which allow the aforesaid more general solution to be implemented.

According to a first embodiment, the crossbar has a closed or open tubular section inscribed in an annular ring gear provided on at least one or on each of its end caps,
said ring gear(s) being coaxial to each other and being engaged with a driving pinion of a motorised rotating drive unit of said crossbar,
which gear reducer member unit is assembled on a rotating support terminal associated with each of the two head ends of said crossbar, and
while the at least one ger reducer member for actuating the oscillatory motion of said at least one nozzle is also mounted on said stationary terminal and has an output shaft radially oriented with respect to the axis of said annular ring gears, and ends with a crank-like end to which one end of said connecting rod is articulated, said connecting rod, in a position engaged on said crank, being positioned with its longitudinal axis coincident with the axis of rotation of said annular ring gears and
the opposite end of said connecting rod being articulated by means of a ball joint to a radial actuating arm of said at least one oscillating plate.

The ring gears can be externally toothed and/or internally toothed.

In a further embodiment which can be provided in combination with the previous one, the crossbar carries two or more nozzles, each mounted on an oscillating plate at a different predetermined point relative to the longitudinal extension of the crossbar,
being provided a mechanism for transmitting the oscillatory motion by means of push and poll rods, which rods connect to each other and to a rocker arm the said oscillating plates supporting the nozzles, said rocker arm being provided at an intermediate point with reference to the longitudinal extension of the crossbar and said rocker arm being controlled by a central spindle oriented in a secant direction to the rotation path of the crossbar, which spindle has, in a radial position with respect to the axis of rotation of the crossbar, an actuating arm terminating in a spherical engagement seat for a spherical end joint provided at the corresponding end of the connecting rod, the center of the spherical joint seat and said spherical end joint being provided to coincide with the axis of rotation of the crossbar.

According to a further embodiment which can be provided in combination with one or more of the previous embodiments, the crossbar has a substantially U-shaped cross-section with two parallel side walls delimiting a dispensing port, the drive shaft of the oscillating plate and/or the intermediate rocker arm being pivotably mounted with its opposite ends in said two walls and the oscillating plates and/or the rocker arm being oscillating fulcrumed to one of said two walls, while the nozzle or nozzles are fixed to said oscillating plates in a position intermediate between said two walls.

In a preferred but non-limiting embodiment, the crossbar carries four dispensing heads positioned symmetrically with respect to the central diametral plane, each head being provided with at least one dispensing nozzle and being mounted on an oscillating plate,
said rocker arm being provided for in a central position of the crossbeam symmetrically interposed between two dispensing heads on each half of said crossbar and being the two oscillating plates closer to said rocker arm articulated at a respective end thereof by means of a first rod and in an eccentric position with respect to the oscillation axis of the corresponding plate, while the oscillating plates carrying the delivery heads further away from the centre of the crossbar are connected by means of a tie rod to an eccentric point with respect to the oscillating axis of the respective oscillating plate interposed between the latter and the rocker arm.

According to yet another feature which can be provided in combination of each of the aforementioned embodiments, the pivotal support ends of the crossbar are mounted vertically sliding along a vertical column and in a manner synchronised with respect to time and/or stroke, in both upward and downward directions.

Furthermore, according to yet another characteristic, said gantry, said pressure fluid delivery bar and/or a vehicle to be processed are movable relatively to each other in the longitudinal direction and/or transverse extension of said vehicle.

An embodiment can provide in combination with one or more of the previous embodiments and/or characteristics that said at least one nozzle is supported on said support assembly in such a position that the propagation axis of the jet dispensed from said nozzle is oriented against a facing surface of the vehicle.

Furthermore, to said dispensing bar and/or possibly also to other parts of the gantry are fixed or fixable sensors for scanning the profile, side and/or front and/or rear of the vehicle which are connected to an analysis unit of said profile obtained from said scanning,
wherein said analysis unit controls, directly or indirectly, the positioning of the gantry and/or the dispensing bar relative to the vertical and/or horizontal position and/or to the angle of incidence of the jet against the vehicle relative to a horizontal plane and/or the oscillation of the nozzles relative to the orientation of the jet propagation axis in the transverse direction of the vehicle around an oscillation axis having at least one directional component in the longitudinal direction of the vehicle.

As far as the aforesaid analysis unit is concerned, this can be a processing unit in which a program is loaded which codifies the instructions to make this unit able to identify the said areas protruding from the data supplied by the scanning unit and to make this unit able to generate the command signals of motorized movement units of the gantry and/or of the support unit of the nozzle(s) and/or of the nozzle (s) .

In this case, the analysis unit directly controls the movements of the gantry and/or of the support group and/or of the nozzle(s).

It is possible to associate a driver unit to the analysis unit which generates the command signals of the motorized units for moving the gantry and/or the support unit and/or the nozzle(s), which driver unit receives signals for generating of the seven command signals from the analysis unit. In this case, the control takes place indirectly by the analysis unit.

The side and/or front and/or rear vehicle profile scanning unit can be manufactured according to one of the embodiments of the following list:
a. Vehicle scanning photocell barrier
b. Diffuse with three photocells mounted on a roof drying bar and/or high pressure fluid nozzle support bar
c. Ultrasonic sensors
d. Laser sensors
e. radar sensors

and/or combinations of these,
each of said scanning units being provided in combination with a unit for measuring the longitudinal position of the gantry and/or of the support group and/or of the nozzle(s) along the front-rear extension of the vehicle.

A preferred embodiment can provide that the machine is configured for the treatment of undercut areas delimited by a protruding element having a substantially horizontal orientation such as a spoiler or a box mounted on the roof of the vehicle, or the like, wherein the positioning of the gantry and/or of the fluid delivery bar of the orientation of said at least one nozzle are determined by the control unit and are such that the axis of propagation of the jet(s) is substantially contained in the horizontal plane coinciding with said projecting element protruding or with the sub-frame area bounded by said projecting element upwards while there is provided the control of an alternative oscillation of the nozzle bar in the vertical plane and for an angular amplitude providing for an angular amplitude providing for an inclination of said propagation axis alternately upwards and downwards with respect to the horizontal orientation and/or the oscillation of the nozzle or nozzles in the direction of the transversal axis of the vehicle, said two oscillations being performed in a mutually synchronized manner.

In relation to the above it should be noted that the dispensing bar can be configured to dispense alternatively or together, if necessary, jets of washing liquid and/or a forced flow of high speed air for drying or similar processes.

Furthermore, in the present example, the dispensing bar is provided as in most cases in the form of a horizontal element. However, it is evident to those skilled in the art that the inventive concept is also applicable by providing a dispensing bar, having a different spatial orientation, for example a vertical dispensing bar, i.e. with the longitudinal axis oriented vertically and rotatable around said vertical axis.

The characteristics of the invention and the advantages deriving from it will become clearer from the following description of some preferred embodiments illustrated by way of example in the attached figures in which:
Figure 1 schematically shows a side view of a high-pressure washing machine for a motor vehicle provided with a rear spoiler.
Figure 2 shows a perspective view on a dispensing bar of a washing and/or drying fluid.

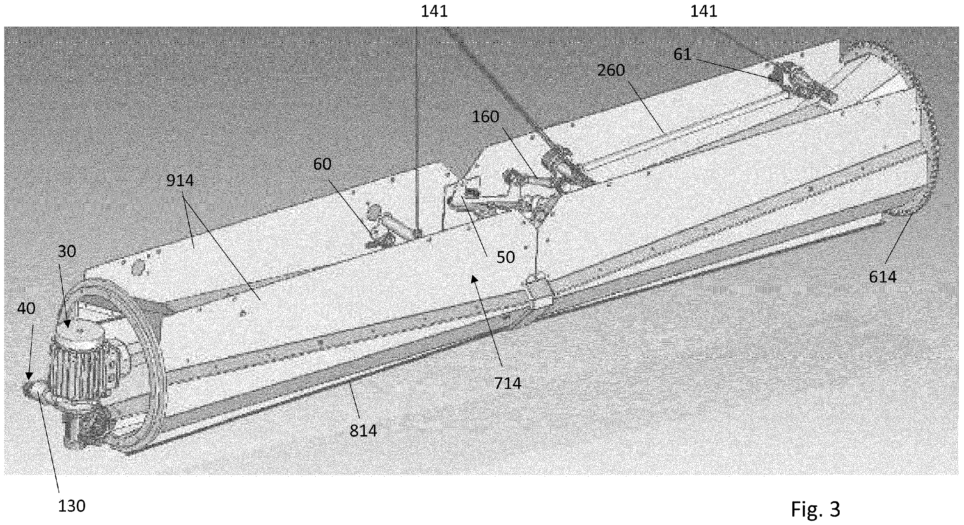

Figure 3 shows an enlarged view of the rotating crossbar which forms part of the dispensing bar, the rotational support terminals of said crossbar being omitted and which in the present case also constitute the slides for vertical sliding along the vertical columns of the gantry.
Figures 4 to 6 show a front view of the dispensing bar which is in turn sectioned along a vertical plane, making the dispensing nozzles and the mechanism for actuating their oscillation visible in the transversal direction of the vehicle, i.e. with a reciprocating oscillatory motion from side to side thereof, respectively in the two extreme positions and in the intermediate one of oscillation of said nozzles.
Figures 7 to 9 show a cross section along a plane perpendicular to the longitudinal axis of the dispensing bar respectively in three positions of rotation of said dispensing bar.
Figure 10 shows an enlarged detail of the spherical coupling between the connecting rod and the oscillation spindle of the central rocker arm for actuating the lateral oscillatory motion of the nozzles.
Figure 11 shows an enlarged detail of the crank actuation gear reducer to which the end of the connecting rod opposite to that shown in figure 10 is coupled.

Vehicle washing machine, and in particular those for washing cars, are divided into two broad categories: tunnel machines, in which the vehicle moves forward to reach the washing and drying systems, and mobile gantry machines, in which the vehicle is stationary on a track along which one or more gantry structures move, sliding on tracks, on which the devices for spraying the washing liquids, the brushes and the vehicle drying.

In both types of machine, the washing operations can take place by means of a group of rotating brushes which come into contact with the various parts of the bodywork during the relative motion between the gantry and the vehicle and/or by means of high pressure jets a washing fluid and optionally a pre-washing fluid.

Furthermore, the machines known in the state of the art have various configurations and different solutions relating to the positioning and construction of the brush group, the devices for spraying the washing liquids and the drying devices, as well as the hydraulic and electrical systems aimed at regulating operation of the car wash facility.

Furthermore, washing machines are known and widespread which have a double gantry, so as to differentiate the washing phases by allocating different functions to each gantry, so as to speed up the washing.

It is specified that the executive variants illustrated in the attached figures are given for illustrative purposes only and to better clarify concepts and advantages of the machine object of the present invention, but are not to be understood as limiting the inventive concept of the present patent application, which is to realizing a machine for washing vehicles, in particular cars, comprising measures suitable for allowing effective washing of the surfaces relating to protruding parts which form undercut areas, thanks to the positioning of washing nozzles which emit fluid at high pressure at the level of said undercut areas and the orientation of the nozzles against and within said undercut areas.

The gantry 1 according to a non-limiting embodiment, consists of two vertical uprights 11, connected to each other by means of a horizontal crossbar 13 arranged at a certain height.

The vertical uprights of which only one indicated by 11 is visible support each other at least one of the brushes belonging to the group of brushes.

In particular, in the illustrated figures the group of brushes consists of a horizontal brush 21, rotatably supported so as to rotate according to a horizontal axis of rotation with respect to the support surface of the vehicle, and by two vertical brushes 22 which are rotatably supported so as to be able to rotate according to a vertical rotation axis with respect to the support surface of the vehicle to be washed.

Furthermore, the horizontal crossbar 13 is connected frontally to the uprights 11, so as to cantilever the two vertical brushes 22.

The vertical rotation axis B is supported at the top by the horizontal crossbar 13, in particular the upper end of the vertical rotation axis B is connected to support means 131 of the same, so as to allow rotation of the vertical brushes 22.

Preferably, the horizontal axis of rotation A of the horizontal brush 21 is translatable in a vertical direction or upwards and/or downwards with respect to the support surface of the vehicle, translation means (not shown) being provided for placing in relative motion the horizontal brush 21 with respect to the vehicle to be washed, so that the horizontal brush 21 can exert a transversal washing action along the entire length, or over a large part of the length, of the vehicle.

Similarly, it is possible to provide that the support means 131 of the vertical brushes 22, in addition to allowing rotation around the axis B, also allow the translation of the vertical brushes according to a mutual approach/removal direction.

The vehicle washing machine which is the object of the present invention can also include the components and characteristics common to machines known in the state of the art.

For example, the vertical brushes 22 can be guided to slide both transversely and longitudinally with respect to the vehicle to be washed.

Furthermore, washing members 14 can be provided which operate by emitting high pressure jets of a washing fluid and possibly also drying devices, supported on the same gantry 1.

Finally, the gantry 1 can be placed on the ground and be guided slidingly on rails by means of translation as indicated by the arrow F.

In the illustrated embodiment, the washing devices using high pressure fluid comprise a transverse horizontal dispensing bar 14 which carries one or more nozzles 141 which have a jet opening in a horizontal direction and parallel to the longitudinal axis of said transversal bar, for which the set of nozzles covers the entire surface to be treated.

With reference to the direction of the axis of propagation of the longitudinal jet of the bar in the direction of the vertical plane, i.e. from top to bottom and vice versa, the present embodiment provides that said orientation of the jets of the nozzles 141 upwards and/or downwards is obtained thanks to the fact that the entire transversal dispensing bar 14 can be rotated around the horizontal axis.

Furthermore, as will appear more clearly below, the nozzles 141 can oscillate in the transverse direction of the vehicle, i.e. alternatively towards the right side and towards the left side so as to perform a brushing and/or brushing function in said transversal direction to the longitudinal axis of the vehicle.

As is evident from the following figures, the bar 14 has end parts 214 at its ends which are intended to engage the support columns 11 in a sliding and mutually synchronised manner by means of motorised actuators for vertical translation not shown in detail.

The end parts 214 are provided fixed in rotation and in the same can be integrated as shown in the present example and in a non-limiting way the fan units for generating a flow of drying air which are indicated generically with 314.

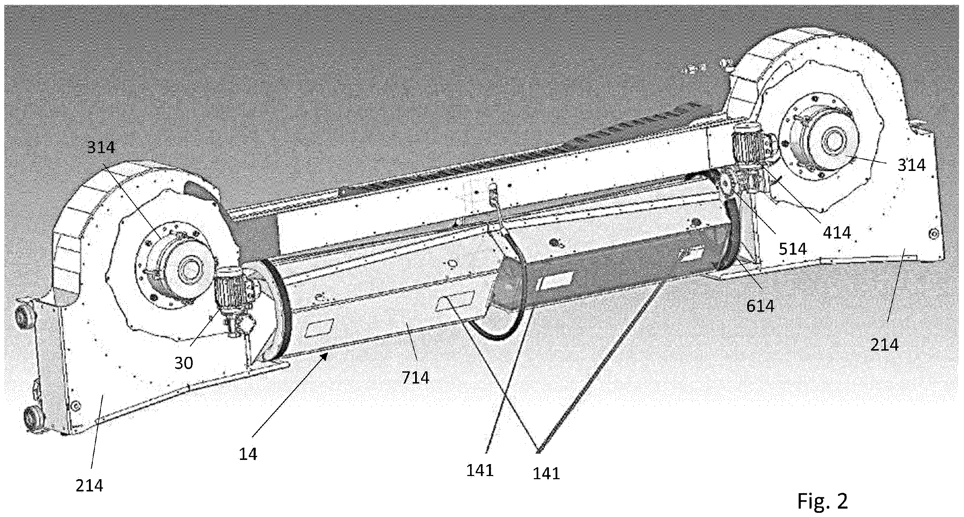

At least one of the end parts 214 carries, as shown in Figure 2, a gear reducer 414 which drives a pinion 514 which is engaged with an annular ring gear externally toothed 614 provided on the corresponding head end of a rotating crossbar 714. The other end of said rotating crossbar 714 is freely rotatably mounted in an annular rotation guide. Said idle rotation guide being coaxial with respect to the rotation axis of the externally toothed ring gear 614.

Thanks to this configuration, the gear reducer allows the dispensing bar 14, i.e. the crossbar 714, to be rotated around a horizontal axis and this rotation can be performed with angular amplitudes of even one complete angle or greater.

As is evident from the figures, a second gear reducer 30 is mounted on the slide opposite to the support slide for the rotation actuation gear reducer of the crossbar, which is intended to actuate the oscillatory motion of the nozzles 141 in a lateral direction, i.e. transverse of the vehicle or in the direction of the longitudinal axis of the dispensing bar.

The construction of said mechanism and of the oscillating support system of said nozzles 141 appears more clearly from the following figures.

The gear reducer 30 has an output driven shaft 130 terminating in a crank 131.

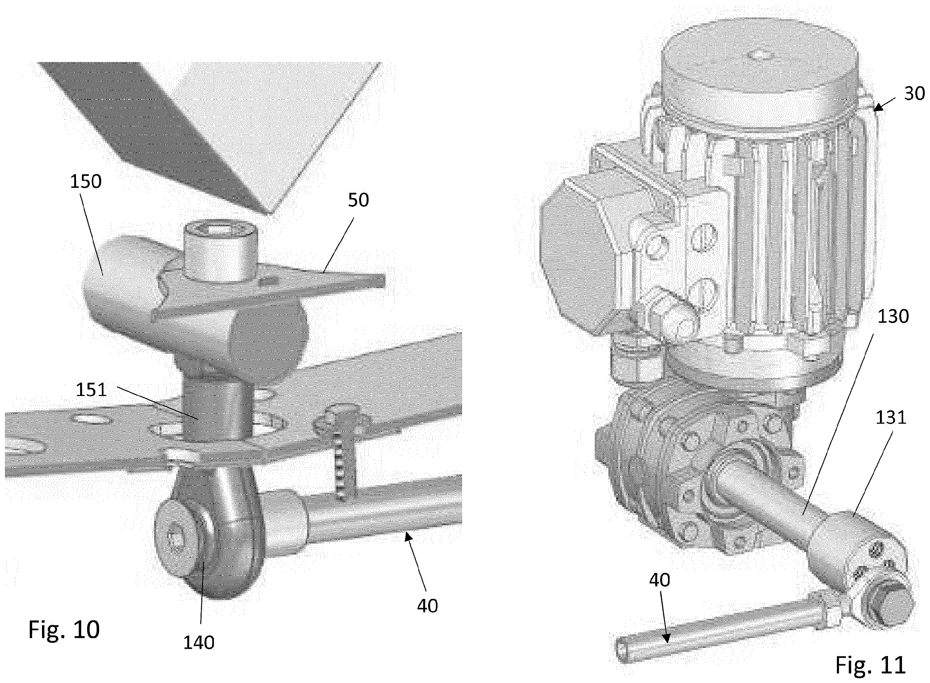

With reference to the rotation axis of the crossbar 714, the gear reducer 30 for actuating the oscillatory motion of the nozzles 114 is provided in such a position, whereby the crank 130 is oriented radially with respect to said rotation axis of the crossbar 714 and ends with the crank in a radial position such that when the connecting rod 40 is coupled to said crank for example by means of an axial pin as shown in figure 11 in greater detail, the longitudinal axis of the connecting rod 40 extends in a position coinciding with the axis of rotation of the rotary crossbar 714.

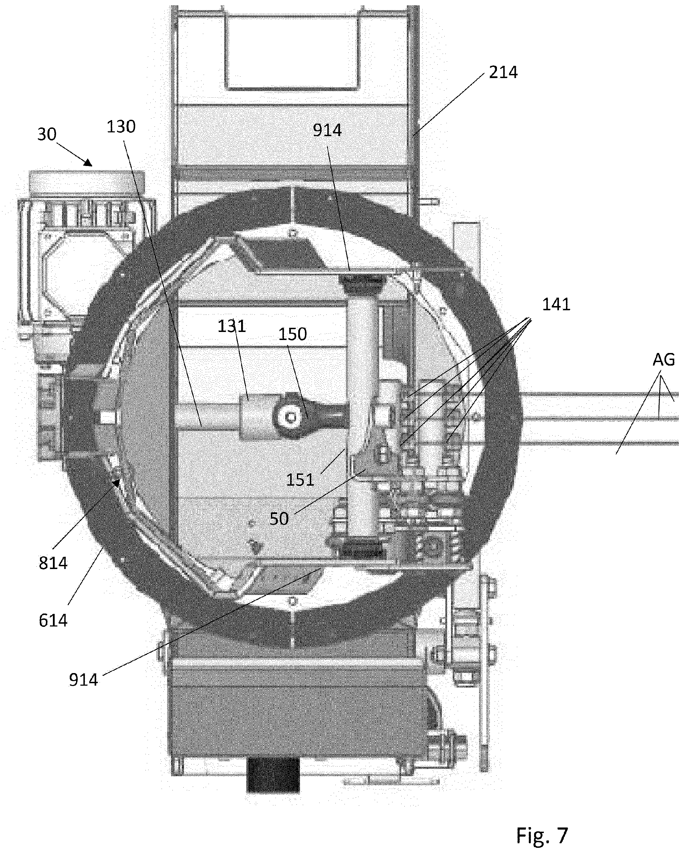

This appears more clearly in figures 7 to 9.

The opposite end of the connecting rod 40 has a spherical end head, i.e. with a spherical sector indicated by 140 and which is intended to engage in the seat corresponding to a spherical sector provided at the end of a radial arm 150 which departs radially with respect to this from a spindle 151 for actuating the oscillation of a rocker arm 50.

The spindle 151 has a radial length such that the center of the spherical sectors of the seat of the arm 150 and of the spherical terminal 140 of the connecting rod 40 coincide with the axis of rotation of the crossbar 714. Therefore, the longitudinal axis of the connecting rod is always positioned perfectly coincident with the axis of rotation of the crossbar.

As clearly appears from figures 7 to 9, this allows the crossbar to be rotated around its axis even if the gear reducer 30 for operating the connecting rod and crank mechanism 130, 40 is positioned stationary on the corresponding terminal 214 of the dispensing bar 14.

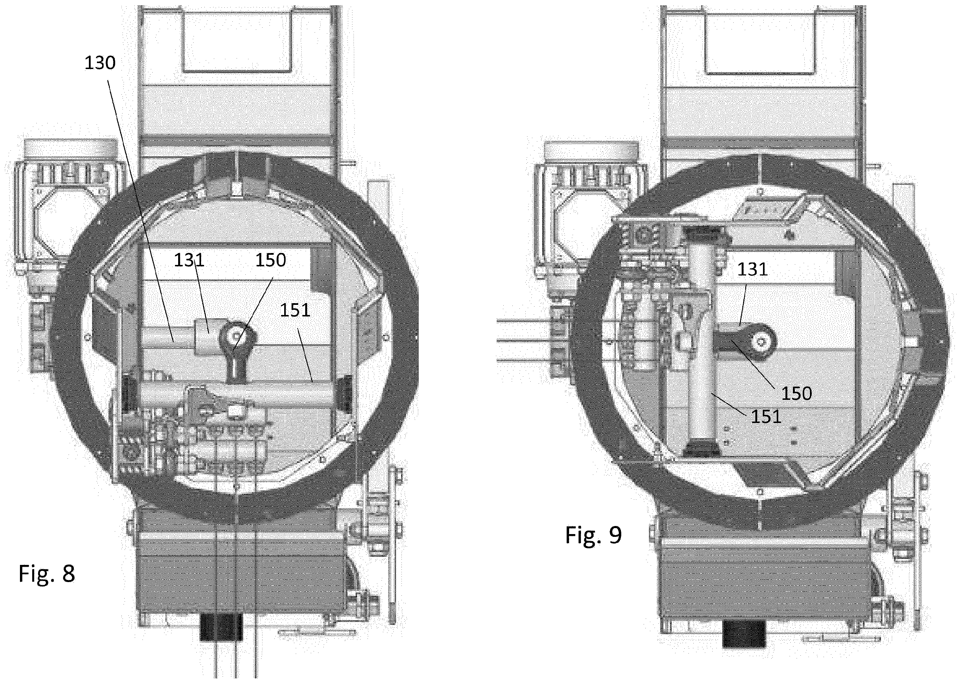

In particular, figures 7 to 9 show three rotation positions of the crossbar 714, i.e. a first position in which the arm 50 is aligned as an extension of the output shaft 130 which operates the crank 131, a second position (fig. 8) in which the crossbar has been rotated by 90° and a third position in which the crossbar has been rotated with respect to the position of figure 7 by 180°.

As is evident, the longitudinal axis of the connecting rod always coincides with the axis of rotation of the crossbar 714.

As regards the mechanism for transmitting the translational motion of the connecting rod 40 to the nozzles, the spindle 151 is mounted rotating around its own axis with its ends on opposite walls of the crossbar 714.

The spindle 151 is fixed integrally for rotation with a rocker arm 50, in particular to a central point of the extension of said rocker arm 50.

The opposite ends of said rocker arm 50 are connected to first support plates 60 of first nozzles 141 by means of tie rods 160. These plates 60 are fixed for rotation around an axis parallel to the axis of the spindle 151 and the tie rods 160 articulate to the same in an eccentric point, or radially spaced with respect to the axis of oscillation of said first support plates 60. At least one dispensing head is fixed to each of these which carries one or more nozzles 141 which are oriented with their axes of the dispensing jets in a direction perpendicular to the rotation axis of the oscillating support plates 60.

In a further point 260 radially spaced from the axis of oscillation of the first support plates 60, a further tie rod 360 is pivoted which connects each of said first plates 60 to a further oscillating plate 61 which carries at least one further dispensing head with one or more nozzles 141. These second oscillating plates 61 are arranged in the areas of the respective ends of the crossbar 714 and are substantially similar to the first plates 60 as regards the orientation of the oscillation axis and the radial distance of the connection point of the corresponding second tie rod 360.

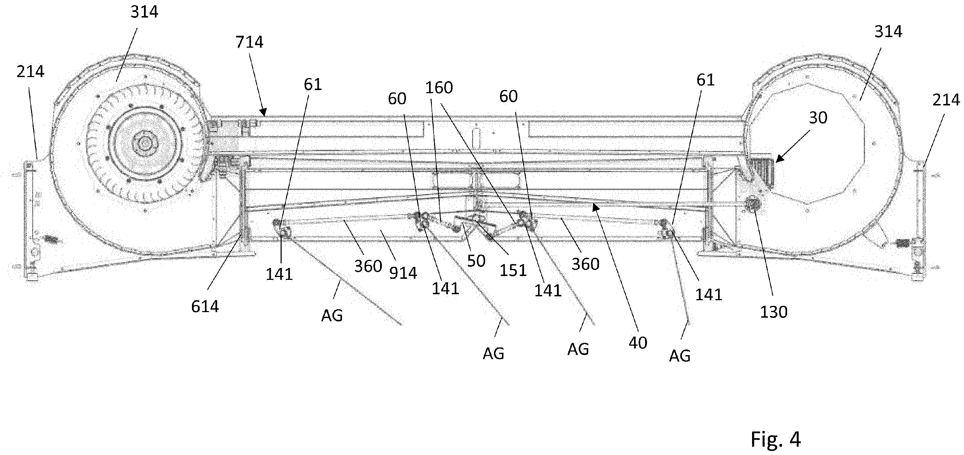

Figures 4 to 6 show three positions of the nozzles and of the relative mechanism comprising said rocker arm 50, the tie rods 160, 360 and the first and second plates 60, 61.

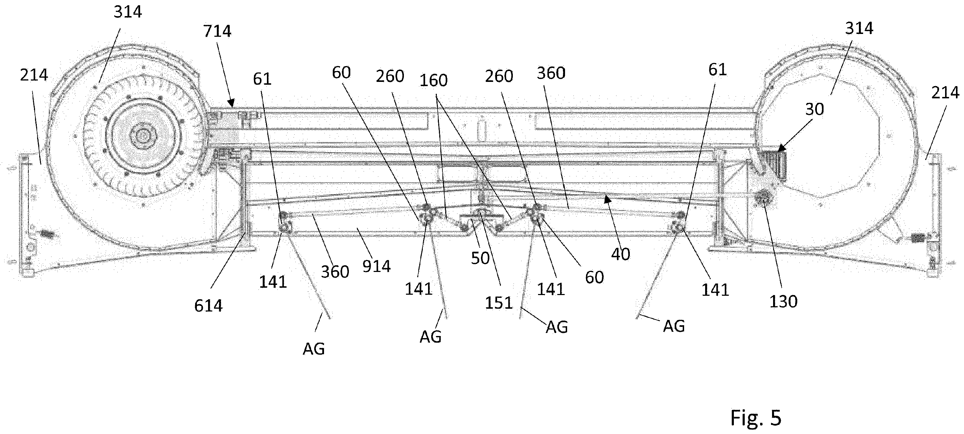

In figure 4 the nozzles 141 are oriented with the central axes of propagation of the jets AG oriented to the right. In figure 5, the rocker arm is in a horizontal position and the nozzles are oriented with the jet propagation axes according to intermediate and predetermined directions. These are set or can be set in such a way that said propagation axes AG of the jets converge towards the central plane of symmetry of the crossbar 714.

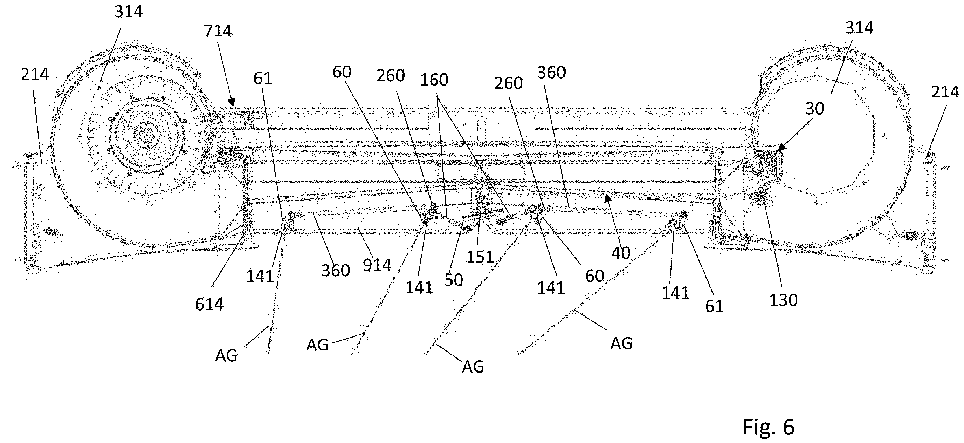

In figure 6 the nozzles are swung to the extreme position opposite to that of figure 4, i.e. in the extreme position to the left.

As is evident from the figures, the tie rods 160, 360 can be adjustable in relation to their length, allowing the nozzles to be given an orientation even in the central oscillation position which is inclined by a predetermined angle with respect to the radial orientation relative to the longitudinal axis of crossbar 714.

This orientation can be set differently for each nozzle or for each dispensing head.

Furthermore, in a preferred but non-limiting way, the position of the first and second oscillating plates 60, 61 on the crossbar 714 and therefore of the nozzles or dispensing heads positioned thereon is symmetrical with respect to the central transversal plane of the crossbar 714.

With reference in particular to figures 7 to 9, the crossbar 714 consists of a tubular shell wall which is open on one side, i.e. substantially U-shaped and which is indicated with 814. The two walls which form the branches of the U-shape indicated with 914 are parallel to each other and define a delivery mouth for the drying air flow.

In this configuration of the crossbar 714, the actuation arm 150 of the rocker arm 50 is rotatably mounted with its ends in said walls 914 which constitute the branches of the U-shaped section, while the small plates 60, 61 supporting the dispensing heads they are pivoted to one of said walls 914 in an oscillating manner around an axis perpendicular to said walls and parallel to the axis of arm 150.

In this embodiment, each dispensing head has three nozzles 141.

From the foregoing the considerable constructive simplicity of the dispensing bar and also the functional effectiveness of the same clearly appear. The nozzles can be fed by means of flexible pipes and a simple revolving joint, while avoiding rotating electrical contacts and the related purchase and/or maintenance and/or replacement costs due to wear.

Mechanically, the dispensing bar is therefore less expensive and functionally more robust, guaranteeing rotations of said bar by 360° or more.

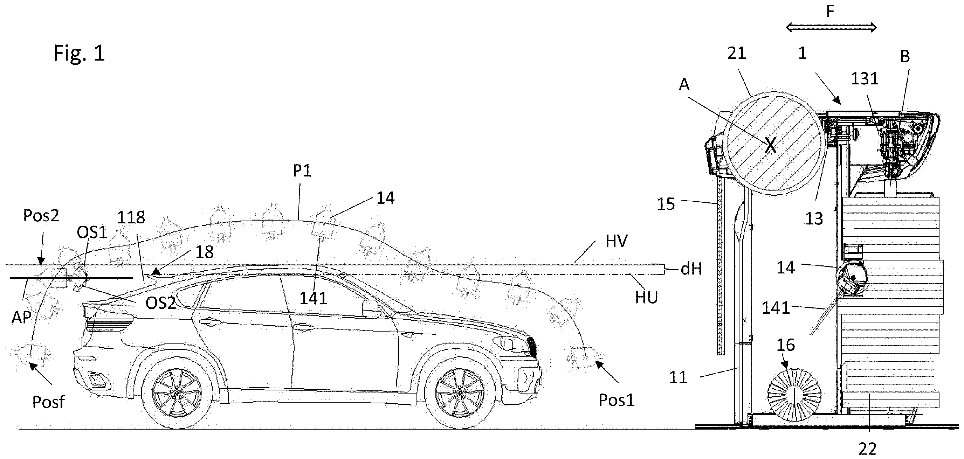

According to a further characteristic, the gantry illustrated in figure 1 has a profile detection unit, at least of the lateral one, i.e. of the projection of the profile of the vehicle on a longitudinal vertical plane, i.e. oriented in the front-rear direction of the vehicle indicated by 15 and carried by the gantry 1 in a predetermined advanced position with respect to the brushes and to the treatment units such as the high pressure washing fluid delivery bar and/or the drying air delivery bar or other treatment units.

In the embodiment illustrated, said unit for detecting the shape of the profile of the vehicle 15 consists of a linear array of sensors placed side by side in a vertical direction. The sensors can be of different types and for example they consist of distance sensors, for example acoustic and/or optical which detect the height of the vehicle profile from the ground at the point where the vertical linear array intersects the vehicle profile.

Motorized units not shown in detail are associated with the gantry, each of which performs various functions including vertical translation of the horizontal brush, rotation of the horizontal brush, movements relative to the gantry of the vertical brush(es) and the rotation of the vertical brush(es), the vertical movement of the support bar of the nozzle(s) for the delivery of jets of high pressure washing fluid, the rotation around the horizontal axis of said bar and/or of the nozzle(s), the vertical translation of the bar of delivery of the drying air, the translation of the gantry relative to the vehicle and other operating units such as for example the wheel rim washing units indicated with 16.

The motorised units both those illustrated in detail such as the gear reducer 414 for actuating the rotation of the crossbar 714, and the one 30 for actuating the connecting rod and crank mechanism which controls the oscillation of the nozzles 141 and both those not expressly illustrated and/or described are controlled by a control unit which is not shown in detail. The movement of the delivery bar and/or brushes, the orientation of the delivery bar and/or the swinging of the same up and down and/or of the nozzles to the right and/or to the left take place in function of the shape of the detected profile of the vehicle, at least of the longitudinal one, in such a way that the operating units such as the brushes and/or the high pressure washing fluid dispensing nozzles and/or the washing fluid dispensing bar and /o of the drying air move vertically and horizontally along a path of non-interference with the vehicle which follows the profile of the vehicle, keeping said operating units at a distance such that they perform the intended function, i.e. at a distance such that the bristles of the brushes act on the surface of the vehicle and/or such a distance that the jets of high pressure fluid and/or the drying air act effectively on the surface of the vehicle in relation to their intended function, without interference arises between the structure of the brushes and the bars which can lead to damage to the vehicle.

Figure 1 shows this path with the continuous line indicated by P1.

In relation to figure 1, as a wholly indicative way, along said path the various positions assumed by the crossbar 714 which carries the nozzles for dispensing the pressurized fluid jets are shown, in relation to the vertical position and orientation of the axis central propagation of the cone formed by the jet of high pressure washing fluid.

As is evident, the nozzles are oriented in a direction substantially perpendicular to the surface of the vehicle or to a tangential thereof at the point of incidence of the central axis of propagation of the jets with the surface of the vehicle.

Passing from an orientation parallel to the horizontal plane of substantially 0° in the initial position posi in which the jets are oriented substantially horizontally against the front of the vehicle to the opposite and opposite position with an angle substantially 180° in the final position posf in which the jets are oriented horizontally against the rear of the vehicle.

Pos2 indicates the position and orientation of the nozzle or nozzles and therefore of the bar in correspondence with the undercut area formed by a rear spoiler 18 of the vehicle.

As appears evident in said pos2, the support bar 14 of the nozzles for dispensing jets of high pressure fluid is held for a certain limited period of time and the same and/or the individual nozzles are oriented with the axis of propagation in the direction horizontal and against the undercut area 118 formed by the spoiler 18 and by the underlying band of the rear window and/or roof of the vehicle. AP indicates the axis of propagation of the jet(s), while the two arrows OS1 and OS2 indicate the alternative upward and downward oscillation of the nozzles for a pre-established angle so as to generate a brushing effect of the area of undercut 118, i.e. of translation of the band of incidence of the jet or jets of fluid at high pressure against the surface of said undercut area.

The command for stopping the nozzle 141 holder bar 14 at the level of the undercut area 118 and/or the spoiler 18 and orientation of the nozzles with the propagation axis of the jets substantially horizontal and/or the oscillation command of the nozzle(s) is generated by a control unit not shown in detail to which the vehicle profile sensors 15 are connected.

The profile detection signals with reference to the vertical and horizontal coordinates can be used to identify the presence and position of the spoiler 18 and therefore to position and orient the nozzles in said position for washing the spoiler and the undercut area.

According to a preferred embodiment, however, the vertical position of the spoiler 18 and therefore of the undercut area is defined thanks to the measurement of the overall height of the vehicle from which a predetermined measurement calculated on the basis of the average of the difference in height between the of the spoiler and the overall ground clearance of the vehicle. The horizontal line HV indicates the height of the vehicle. The difference dH relates to the preset parameter and is calculated as the average of the values measured for the various types of vehicles. Line HU defines the vertical position of the nozzles on the basis of the difference between the height of the vehicle HV and the said empirical value dH.

Since this dH value is an average value, in order to ensure effective treatment of the spoiler 18 and of the undercut area 118 defined by the same, the orientation of the AP propagation axis of the jets of pressure washing fluid as indicated by the arrows OS1 and OS2.

In combination or alternatively to the oscillatory movement of the nozzles, it is possible to provide an alternative translational movement between two extreme positions of a predetermined range of vertical positions.

It is clear that the operating mode envisaged for a spoiler also applies, for example, in the case of the presence of a so-called skybox.

According to a further possible feature, the machine can be provided with nozzles for dispensing a pre-wash chemical fluid and/or other fluids such as wax, anti-halo and/or rinsing liquid, and it is possible to foresee that the characteristics relating to the delivery of the high-pressure washing liquid with reference to the treatment of protruding areas of the vehicle and the relative undercut areas or areas covered by said protruding areas is extended and applied also to the aforementioned pre-wash and/or anti-halo fluids and/or to wax and/ or flushing fluids.

In this case it is possible to use the same nozzles 141 and the corresponding bar 14 as the nozzles are connected alternatively to a supply source of said one or more fluids corresponding to the envisaged treatment phase or for at least one or some of said further fluids it is possible to provide dedicated nozzles mounted on the same bar 14 or on a dedicated bar.

In both cases it is possible to provide a similar construction for the nozzles dedicated to the second fluid and/or to provide an oscillating movement of the nozzles for both fluids according to one of the methods described above.

## Claims

1. Vehicles washing machine, in particular cars or the like, comprising at least one gantry (1) on which a dispensing bar (14) of at least one washing fluid is mounted,
wherein the dispensing bar (14) comprises at least one crossbar (714) supporting at least one nozzle (141) dispensing said washing fluid, and wherein the crossbar (714) is rotatably mounted for a predetermined angular amplitude around an axis coincident with and/or parallel to its longitudinal axis;
at least one motorised rotary drive unit (414, 514, 614) of said crossbar being provided for rotating said crossbar (714) around said longitudinal axis of rotation,
wherein said at least one nozzle (141) is mounted on said crossbar (714) with its central jet propagation axis (AG) oriented transversely to the longitudinal extension of said crossbar (714),
said at least one nozzle (141) is fixed to said crossbar (714) in an oscillating manner around an axis perpendicular to a plane parallel to said crossbar (714) longitudinal axis and/or containing said central axis of jet propagation (AG) dispensed by said at least one nozzle (141), said at least one nozzle being provided with a gear reducer member (30) for driving said oscillating motion of said nozzle (141),
**characterised in that**
said gear reducer member (30) for driving said oscillatory motion of said at least one nozzle (141) being assembled on a support terminal (214) of said crossbar (714) which is stationary, i.e. not rotating and is provided at least at one end of said crossbar (714) to which said crossbar (714) is connected so as to rotate around said axis of rotation,
said gear reducer member (30) for driving said oscillatory motion being dynamically connected to a slider-crank transmission mechanism, said crank (131) in turn controlling a mechanism comprising at least one oscillating plate (60,61) supporting at least one nozzle (141), said connecting rod being provided with its longitudinal axis coinciding with the axis of rotation of said crossbar (714) and being connected to at least one control arm (150) of said at least one oscillating plate (60, 61) by means of a ball joint (140) .

2. Vehicles washing machine according to claim 1, wherein said crossbar (714) has a closed or opened tubular section inscribed in an annular ring gear (614) provided on at least one or on each of its end caps,
said ring gear(s) (614) being coaxial to each other and being engaged with a driving pinion (514) of a motorised rotating drive unit of said crossbar (714),
which gear reducer member unit is assembled on a rotating support terminal (214) associated with each of the two head ends of said crossbar, and
while the at least one gear reducer member (30) for driving the oscillatory motion of said at least one nozzle (141) is also mounted on said stationary support terminal (214) and has an output shaft (130) radially oriented with respect to the axis of said annular ring gears (614), and ends with a crank-like end to which one end of said connecting rod is articulated, said connecting rod (40), in a position engaged on said crank (131), being positioned with its longitudinal axis coincident with the axis of rotation of said annular ring gears (614), and
the opposite end of said connecting rod (40) being articulated by means of a ball joint (140) to a radial actuating arm (150) of said at least one oscillating plate (60, 61).

3. Vehicles washing machine according to claim 1 or 2, wherein the crossbar (714) carries two or more nozzles (141), each mounted on a oscillating plate at a different predetermined point relative to the longitudinal extension of the crossbar (714),
being provided a mechanism for transmitting the oscillatory motion by means of push and pull rods, which rods (360) connect to each other and to a rocker arm (50) the said oscillating plates (60,61) supporting the nozzles (141), said rocker arm being provided at an intermediate point with reference to the longitudinal extension of the crossbar (714) and said rocker arm being controlled by a central spindle (151) oriented in a secant direction to the rotation path of the crossbar (714) which spindle (151) has, in a radial position with respect to the axis of rotation of the crossbar, an actuating arm terminating in a spherical engagement seat for a spherical end joint provided at the corresponding end of the connecting rod, the centre of the spherical joint seat and said spherical end joint being provided to coincide with the axis of rotation of the crossbar (714).

4. Vehicles washing machine according to one or more of the preceding claims, wherein the crossbar (714) has a substantially U-shaped cross-section (814) with two parallel side walls (914) delimiting a dispensing port, the drive shaft (151) of the oscillating plate and/or the intermediate rocker arm being pivotably mounted with its opposite ends in said two walls and the oscillating plates and/or the rocker arm (50) being oscillating fulcrumed to one of said two walls, while the nozzle or nozzles (141) are fixed to said oscillating plates in a position intermediate between said two walls.

5. Vehicles washing machine according to one or more of the preceding claims, wherein the crossbar (714) carries four dispensing heads positioned symmetrically with respect to the central diametrical plane, each head being provided with at least one dispensing nozzle (141) and being mounted on a oscillating plate,
said rocker arm (50) being provided for in a central position of the crossbar (714) symmetrically interposed between two dispensing heads on each half of said crossbar (714) and being the two oscillating plates closer (60) to said rocker arm articulated at a respective end thereof by means of a first rod (160) and in an eccentric position with respect to the oscillation axis of the corresponding plate, while the oscillating plates carrying the delivery heads (61) further away from the centre of the crossbar (714) are connected by means of a tie rod (360) to an eccentric point with respect to the oscillating axis of the respective oscillating plate interposed between the latter and the rocker arm.

6. Vehicles washing machine according to any one or more of the preceding claims, wherein the pivotal support ends of the crossbar (714) are mounted vertically sliding along a vertical column and in a manner synchronised with respect to time and/or stroke, in both upward and downward directions.

7. Vehicles washing machine according to any one or more of the preceding claims, wherein said gantry (1), said pressure fluid dispensing bar (14) and/or a vehicle to be processed are movable relatively to each other in the longitudinal direction and/or transverse extension of said vehicle.

8. Vehicles washing machine according to one or more of the preceding claims, wherein said at least one nozzle (141) being supported on said support assembly in such a position that the propagation axis of the jet (AG) dispensed from said nozzle (141) is oriented against a facing surface of the vehicle.

9. Vehicles washing machine according to any one or more of the preceding claims, wherein said dispensing bar (14) is provided with sensors for scanning the profile (15), side and/or front and/or rear of the vehicle, which are connected with an analysis unit of said profile obtained from said scanning,
wherein said analysis unit controls, directly or indirectly, the positioning of the gantry (1) and/or the dispensing bar (14) relative to the vertical and/or horizontal position and/or the angle of propagation of the jet (AG) against the vehicle relative to a horizontal plane and/or the oscillation of the nozzles (141) relative to the orientation of the jet propagation axis in the transverse direction of the vehicle around an oscillation axis having at least one directional component in the longitudinal direction of the vehicle.

10. Vehicles washing machine according to one or more of the preceding claims, intended for the treatment of undercut areas (18) delimited by a protruding element having a substantially horizontal orientation such as a spoiler or a box mounted on the roof of the vehicle, or the like, wherein the positioning of the gantry (1) and/or the fluid dispensing bar (14) of the orientation of said at least one nozzle (141) are determined by the control unit and are such that the axis of propagation of said jet(s) (AG) is substantially contained in the horizontal plane coinciding with said projecting element or with the sub-frame area bounded by said projecting element upwards while there is provided the control of an alternative oscillation of the dispensing bar (14) in the vertical plane and for an angular amplitude providing for an inclination of said propagation axis alternatively upwards and downwards with respect to the horizontal orientation and/or the oscillation of the nozzle or nozzles (141) in the direction of the transversal axis of the vehicle, said two oscillations being performed in a synchronised manner.

## Patentansprüche

1. Fahrzeugwaschmaschine, insbesondere für Kraftfahrzeuge oder dergleichen, umfassend mindestens ein Portal (1), an dem ein Abgabebalken (14) für mindestens eine Waschflüssigkeit montiert ist,
wobei der Abgabebalken (14) mindestens eine Traverse (714) umfasst, die mindestens eine die Waschflüssigkeit abgebende Düse (141) trägt, und wobei die Traverse (714) mit einer vorbestimmten Winkelausdehnung um eine mit ihrer Längsachse zusammenfallende und/oder zu ihr parallele Achse drehbar gelagert ist;
wobei mindestens eine motorisierte Drehantriebseinheit (414, 514, 614) der Traverse vorgesehen ist, um die Traverse (714) um die Längsdrehachse zu drehen,
wobei die mindestens eine Düse (141) an der Traverse (714) mit ihrer zentralen Strahlausbreitungsachse (AG) quer zur Längserstreckung der Traverse (714) ausgerichtet ist,
wobei die mindestens eine Düse (141) an der Traverse (714) oszillierend um eine Achse befestigt ist, die senkrecht zu einer zur Längsachse der Traverse (714) parallelen Ebene steht und/oder die zentrale Ausbreitungsachse (AG) des von der mindestens einen Düse (141) abgegebenen Strahls enthält, wobei die mindestens eine Düse mit einem Getriebemotorelement (30) zum Antrieb der oszillierenden Bewegung der Düse (141) versehen ist,
**dadurch gekennzeichnet, dass**
wobei das Getriebemotorelement (30) zum Antreiben der oszillierenden Bewegung der mindestens einen Düse (141) an einem Trägeranschluss (214) der Traverse (714) montiert ist, der feststehend d.h. nicht drehend ist und mindestens an einem Ende der Traverse (714) vorgesehen ist, mit dem die Traverse (714) derart verbunden ist, dass sie sich um die Drehachse dreht,
wobei das Getriebemotorelement (30) zum Antreiben der oszillierenden Bewegung dynamisch mit einem Schubkurbelgetriebemechanismus verbunden ist, wobei die Kurbel (131) ihrerseits einen Mechanismus steuert, der mindestens eine zumindest eine Düse (141) tragende oszillierende Platte (60,61) umfasst, wobei die Koppelstange so vorgesehen ist, dass ihre Längsachse mit der Drehachse der Traverse (714) zusammenfällt und mit mindestens einem Steuerarm (150) der mindestens einen oszillierenden Platte (60, 61) mittels eines Kugelgelenks (140) verbunden ist.

2. Fahrzeugwaschmaschine nach Anspruch 1, wobei die Traverse (714) einen geschlossenen oder geöffneten röhrenförmigen Querschnitt aufweist, der in einem ringförmigen Zahnkranz (614) eingeschrieben ist, der an mindestens einer oder an jeder seiner Stirnkappen vorgesehen ist,
wobei der (die) Zahnkranz (Zahnkränze) (614) koaxial zueinander sind und mit einem Antriebsritzel (514) einer motorisierten Drehantriebseinheit der Traverse (714) in Eingriff stehen, wobei die Getriebemotorelementeinheit an einem drehbaren Trägeranschluss (214) montiert ist, der mit jedem der beiden Stirnenden der Traverse verbunden ist, und
während das mindestens eine Getriebemotorelement (30) zum Antreiben der oszillierenden Bewegung der mindestens einen Düse (141) ebenfalls an dem feststehenden Trägeranschluss (214) montiert ist und eine Ausgangswelle (130) aufweist, die radial in Bezug auf die Achse der ringförmigen Zahnkränze (614) ausgerichtet ist, und mit einem kurbelartigen Ende endet, an dem ein Ende der Koppelstange angelenkt ist, wobei die Koppelstange (40) in einer an der Kurbel (131) angreifenden Position so angeordnet ist, dass ihre Längsachse mit der Drehachse der ringförmigen Zahnkränze (614) zusammenfällt, und
wobei das gegenüberliegende Ende der Koppelstange (40) mittels eines Kugelgelenks (140) an einem radialen Betätigungsarm (150) der mindestens einen Schwingungsplatte (60, 61) angelenkt ist.

3. Fahrzeugwaschmaschine nach Anspruch 1 oder 2, wobei die Traverse (714) zwei oder mehr Düsen (141) trägt, wovon jede an einer oszillierenden Platte an einem unterschiedlichen vorbestimmten Punkt relativ zur Längserstreckung der Traverse (714) montiert ist, wobei ein Mechanismus zur Übertragung der oszillierenden Bewegung mit Hilfe von Schub- und Zugstangen vorgesehen ist, wobei die Stangen (360) die die Düsen (141) tragenden oszillierenden Platten (60,61) miteinander und mit einem Kipphebel (50) verbinden, wobei der Kipphebel an einem Zwischenpunkt in Bezug auf die Längserstreckung der Traverse (714) vorgesehen ist und der Kipphebel durch eine Zentralspindel (151) gesteuert wird, die in einer Sekantenrichtung zur Drehbahn der Traverse (714) ausgerichtet ist, wobei die Spindel (151) in einer radialen Position in Bezug auf die Drehachse der Traverse einen Betätigungsarm aufweist, der in einem kugelförmigen Eingriffssitz für ein kugelförmiges Endgelenk endet, das an dem entsprechenden Ende der Koppelstange vorgesehen ist, wobei die Mitte des kugelförmigen Gelenksitzes und das kugelförmige Endgelenk derart vorgesehen sind, dass sie mit der Drehachse der Traverse (714) zusammenfallen.

4. Fahrzeugwaschmaschine nach einem oder mehreren der vorhergehenden Ansprüche, wobei die Traverse (714) einen im Wesentlichen U-förmigen Querschnitt (814) mit zwei parallelen eine Abgabeöffnung begrenzenden Seitenwänden (914) aufweist, wobei die Antriebswelle (151) der oszillierenden Platte und/oder des dazwischenliegenden Kipphebels mit ihren gegenüberliegenden Enden in den beiden Wänden schwenkbar montiert ist und die oszillierenden Platten und/oder der Kipphebel (50) an einer der beiden Wände schwenkbar gelagert sind, während die Düse oder Düsen (141) an den oszillierenden Platten in einer zwischen den beiden Wänden liegenden Position befestigt sind.

5. Fahrzeugwaschmaschine nach einem oder mehreren der vorhergehenden Ansprüche, wobei die Traverse (714) vier symmetrisch zur diametralen Mittelebene angeordnete Abgabeköpfe trägt, wobei jeder Kopf mit mindestens einer Abgabedüse (141) versehen und auf einer oszillierenden Platte montiert ist,
wobei der Kipphebel (50) in einer zentralen Position der Traverse (714) symmetrisch zwischen zwei Abgabeköpfen auf jeder Hälfte der Traverse (714) angeordnet ist und die beiden oszillierenden Platten (60) näher an dem Kipphebel liegen und an einem jeweiligen Ende desselben mittels einer ersten Stange (160) angelenkt sind und sich in einer exzentrischen Position in Bezug auf die Oszillationsachse der entsprechenden Platte befinden, während die die weiter von der Mitte des Querbalkens (714) entfernten Abgabeköpfe (61) tragenden oszillierenden Platten mittels einer Zugstange (360) mit einem exzentrischen Punkt in Bezug auf die Oszillationsachse der jeweiligen oszillierenden Platte verbunden sind, die zwischen dieser und dem Kipphebel angeordnet ist.

6. Fahrzeugwaschmaschine nach einem oder mehreren der vorhergehenden Ansprüche, wobei die schwenkbaren Trägerenden der Traverse (714) vertikal gleitend entlang einer vertikalen Säule und zeit- und/oder hubsynchron sowohl in Aufwärts- als auch in Abwärtsrichtung angebracht sind.

7. Fahrzeugwaschmaschine nach einem oder mehreren der vorhergehenden Ansprüche, wobei das Portal (1), der Druckfluidabgabebalken (14) und/oder ein zu bearbeitendes Fahrzeug relativ zueinander in Längsrichtung und/oder Querausdehnung des Fahrzeugs bewegbar sind.

8. Fahrzeugwaschmaschine nach einem oder mehreren der vorhergehenden Ansprüche, wobei die mindestens eine Düse (141) an der Trägeranordnung in einer solchen Position gelagert ist, dass die Ausbreitungsachse des aus der Düse (141) abgegebenen Strahls (AG) gegen eine zugewandte Oberfläche des Fahrzeugs gerichtet ist.

9. Fahrzeugwaschmaschine nach einem oder mehreren der vorhergehenden Ansprüche, wobei der Abgabebalken (14) mit Sensoren zum Abtasten des Profils (15), der Seite und/oder des Vorderteils und/oder des Heckteils des Fahrzeugs versehen ist, die mit einer Analyseeinheit des durch das Abscannen erhaltenen Profils verbunden sind,
wobei die Analyseeinheit direkt oder indirekt die Positionierung des Portals (1) und/oder des Abgabebalkens (14) in Bezug auf die vertikale und/oder horizontale Position und/oder den Ausbreitungswinkel des Strahls (AG) gegen das Fahrzeug in Bezug auf eine horizontale Ebene und/oder die Oszillation der Düsen (141) in Bezug auf die Ausrichtung der Strahlausbreitungsachse in Querrichtung des Fahrzeugs um eine Oszillationsachse mit mindestens einer Richtungskomponente in Längsrichtung des Fahrzeugs steuert.

10. Fahrzeugwaschmaschine nach einem oder mehreren der vorhergehenden Ansprüche, die für die Behandlung von hinterschnittenen Bereichen (18) bestimmt ist, die durch ein vorstehendes Element mit einer im Wesentlichen horizontalen Ausrichtung, wie einen Spoiler oder einen auf dem Fahrzeugdach montierten Kasten oder dergleichen, begrenzt sind, wobei die Positionierung des Portals (1) und/oder des Fluidabgabebalkens (14) für die Ausrichtung der mindestens einen Düse (141) durch die Steuereinheit bestimmt wird und derart eingerichtet ist, dass die Ausbreitungsachse des Strahls (der Strahlen) (AG) im Wesentlichen in der horizontalen Ebene enthalten ist, die mit dem vorstehenden Element oder mit dem durch das vorstehende Element nach oben begrenzten hinterschnittenen Bereich zusammenfällt, während die Steuerung einer alternativen Oszillation des Abgabebalkens (14) in der vertikalen Ebene und mit einer Winkelamplitude vorgesehen ist, die eine Neigung der Ausbreitungsachse abwechselnd nach oben und nach unten in Bezug auf die horizontale Ausrichtung und/oder die Oszillation der Düse oder Düsen (141) in Richtung der Querachse des Fahrzeugs vorsieht, wobei diese beiden Oszillationen synchronisiert ausgeführt werden.

## Revendications

1. Machine de lavage de véhicules, en particulier des voitures ou similaires, comprenant au moins un portique (1) sur lequel est montée une barre de distribution (14) d'au moins un fluide de lavage,
dans laquelle la barre de distribution (14) comprend au moins une barre transversale (714) supportant au moins une buse (141) distribuant ledit fluide de lavage, et dans laquelle la barre transversale (714) est montée rotative pour une amplitude angulaire prédéterminée autour d'un axe coïncidant avec et/ou parallèle à son axe longitudinal,
au moins une unité d'entraînement rotative motorisée (414, 514, 614) de ladite barre transversale étant prévue pour faire tourner ladite barre transversale (714) autour dudit axe de rotation longitudinal,
dans laquelle ladite au moins une buse (141) est montée sur ladite barre transversale (714) avec son axe central de propagation du jet (AG) orienté transversalement à l'extension longitudinale de ladite barre transversale (714),
ladite au moins une buse (141) est fixée à ladite barre transversale (714) de manière oscillante autour d'un axe perpendiculaire à un plan parallèle à l'axe longitudinal de ladite barre transversale (714) et/ou contenant ledit axe central de propagation du jet (AG) distribué par ladite au moins une bouse (141), ladite au moins une buse étant pourvue d'un élément moto-réducteur (30) pour entraîner ledit mouvement oscillant de ladite buse (141),
**caractérisée en ce que**
ledit élément moto-réducteur (30) pour entraîner ledit mouvement oscillant de ladite au moins une buse (141) étant assemblé sur un terminal de support (214) de ladite barre transversale (714) qui est stationnaire, c.à.d. ne tourne pas, et est prévu au moins à une extrémité de ladite barre transversale (714) à laquelle ladite barre transversale (714) est connectée de manière à tourner autour dudit axe de rotation,
ledit élément moto-réducteur (30) pour entraîner ledit mouvement oscillant étant dynamiquement connecté à un mécanisme de transmission à bielle-manivelle, ladite manivelle (131) commandant à son tour un mécanisme comprenant au moins une plaque oscillant (60,61) supportant au moins une buse (141), ladite bielle étant prévue avec son axe longitudinal coïncidant avec l'axe de rotation de ladite barre transversale (714) et étant connectée à au moins un bras de commande (150) de ladite au moins une plaque oscillante (60, 61) au moyen d'un joint à rotule (140).

2. Machine de lavage de véhicules selon la revendication 1, dans laquelle ladite barre transversale (714) présente une section tubulaire fermée ou ouverte inscrite dans une couronne dentée annulaire (614) prévue sur au moins un ou sur chacun de ses capuchons d'extrémité,
ladite/lesdites couronne(s) dentée(s) (614) étant coaxiales entre elles et étant engagées avec un pignon d'entraînement (514) d'une unité d'entraînement rotative motorisée de ladite barre transversale (714),
laquelle unité de l'élément moto-réducteur est assemblée sur un terminal de support rotatif (214) associée à chacune des deux extrémités de tête de ladite barre transversale, et
tandis que l'au moins un élément moto-réducteur (30) pour entraîner le mouvement oscillant de ladite au moins une buse (141) est également monté sur ledit terminal de support (214) fixe et présent un arbre de sortie (130) orienté radialement par rapport à l'axe desdites couronnes dentées annulaires (614) et se termine par une extrémité en forme de manivelle à laquelle une extrémité de ladite bielle est articulée ladite bielle (40), dans une position engagée sur ladite manivelle (131), étant positionnée avec son axe longitudinal coïncidant avec l'axe de rotation desdites couronnes dentées annulaires (614), et
l'extrémité opposée de ladite bielle (40) étant articulée au moins d'un joint à rotule (140) à un bras d'actionnement radial (150) de ladite au moins une plaque oscillante (60, 61).

3. Machine de lavage de véhicule selon la revendication 1 ou 2, dans laquelle la barre transversale (714) porte deux ou plusieurs buses (141), chacune montée sur une plaque oscillante en correspondance d'un différent point prédéterminé par rapport à l'extension longitudinale de la barre transversale (714),
un mécanisme de transmission du mouvement oscillatoire au moyen de tiges de poussée et de traction étant prévu, lesquelles tiges (360) connectent lesdites plaques oscillantes (60,61) supportant les buses (141) entre elles et un balancier (50), ledit balancier étant prévu en correspondance d'un point intermédiaire par rapport à l'extension longitudinale de la barre transversale (714) et ledit balancier étant commandé par une broche centrale (151) orientée dans une direction sécante par rapport à la trajectoire de rotation de la barre transversale (714), laquelle broche (151) présente, dans une position radiale par rapport à l'axe de rotation de la barre transversale, un bras d'actionnement se terminant par un siège d'engagement sphérique pour un joint d'extrémité sphérique prévu en correspondance de l'extrémité correspondante de la bielle, le centre du siège du joint sphérique et ledit joint d'extrémité sphérique étant prévus pour coïncider avec l'axe de rotation de la barre transversale (714).

4. Machine de lavage de véhicules selon l'une ou plusieurs des revendications précédentes, dans laquelle la barre transversale (714) présente une section transversale (814) sensiblement en forme de U avec deux parois latérales parallèles (914) délimitant une ouverture de distribution, l'arbre d'entraînement (151) de la plaque oscillante et/ou le balancier intermédiaire étant monté(s) pivotant avec ses/leurs extrémités opposées dans lesdites deux parois et les plaques oscillantes et/ou le balancier (50) étant pivoté(s) de manière oscillante sur l'une desdites deux parois, tandis que la buse ou les buses (141) sont fixées auxdites plaques oscillantes dans une position intermédiaire entre lesdites deux parois.

5. Machine de lavage de véhicules selon l'une ou plusieurs des revendications précédentes, dans laquelle la barre transversale (714) porte quatre têtes de distribution positionnées symétriquement par rapport au plan diamétral central, chaque tête étant pourvue d'au moins une buse de distribution (141) et étant montée sur une plaque oscillante,
ledit balancier (50) étant prévu dans une position centrale de la barre transversale (714) interposé symétriquement entre deux têtes de distribution sur chaque moitié de ladite barre transversale (714) et les deux plaques oscillantes le plus proches (60) dudit balancier étant articulées en correspondance d'une extrémité respective du même au moyen d'une première tige (160) et dans une position excentrique par rapport à l'axe d'oscillation de la plaque correspondante, tandis que les plaques oscillantes portant les têtes de distribution (61) plus éloignées du centre de la barre transversale (714) sont connectées au moyen d'un câble de traction (360) à un point excentré par rapport à l'axe oscillant de la plaque oscillante respective interposée entre cette dernière et le balancier.

6. Machine de lavage de véhicules selon l'une ou plusieurs des revendications précédentes, dans laquelle les extrémités de support pivotantes de la barre transversale (714) sont montées coulissantes verticalement le long d'une colonne verticale et d'une manière synchronisée par rapport au temps et/ou à la course, à la fois dans les directions ascendantes et descendantes.

7. Machine de lavage de véhicules selon l'une ou plusieurs des revendications précédentes, dans laquelle ledit portique (1), ladite barre de distribution de fluide sous pression (14) et/ou un véhicule à traiter sont mobiles les uns par rapport aux autres dans la direction longitudinale et/ou dans l'extension transversale dudit véhicule.

8. Machine de lavage de véhicules selon l'une ou plusieurs des revendications précédentes, dans laquelle au moins une buse (141) est supportée sur ledit groupe de support dans une position telle que l'axe de propagation du jet (AG) distribué à partir de ladite buse (141) est orienté contre une surface faisant face du véhicule.

9. Machine de lavage de véhicules selon l'une ou plusieurs des revendications précédentes, dans laquelle ladite barre de distribution (14) est prévue avec des capteurs pour le balayage du profil (15), latéral et/ou antérieur et/ou postérieur du véhicule, lesquels capteurs sont connectés à une unité d'analyse dudit profil obtenu à partir dudit balayage,
dans laquelle ladite unité d'analyse commande, directement ou indirectement, le positionnement du portique (1) et/ou de la barre de distribution (14) par rapport à la position verticale et/ou horizontale et/ou à l'angle de propagation du jet (AG) contre le véhicule par rapport à un plan horizontal et/ou à l'oscillation des buses (141) par rapport à l'orientation de l'axe de propagation du jet dans la direction transversale du véhicule autour un axe d'oscillation présentant au moins une composante directionnelle dans la direction longitudinale du véhicule.

10. Machine de lavage de véhicules selon l'une ou plusieurs des revendications précédentes, destinée au traitement de zones de contre-dépouille (18) délimitées par un élément en saillie présentant une orientation sensiblement horizontale tel qu'un spoiler ou un caisson monté sur le toit du véhicule, ou similaire, dans laquelle le positionnement du portique (1) et/ou de la barre de distribution de fluide (14) de l'orientation de ladite au moins une buse (141) sont déterminés par l'unité de commande et sont tels que l'axe de propagation dudit/desdits jet(s) (AG) est sensiblement contenu dans le plan horizontal coïncidant avec ledit élément en saillie ou avec la zone de sous-châssis délimitée par ledit élément en saillie vers le haut, tandis qu'il est prévu la commande d'une oscillation alternative de ladite barre de distribution (14) dans le plan vertical et pour une amplitude angulaire prévoyant une inclinaison dudit axe de propagation, alternativement vers le haut et vers le bas, par rapport à l'orientation horizontale et/ou à l'oscillation de la buse ou des buses (141) dans la direction de l'axe transversal du véhicule, lesdites deux oscillations étant réalisées de manière synchronisée.
